# EUROPEAN PATENT SPECIFICATION

(11) **EP 0 456 471 B1**
(45) Date of publication and mention of the grant of the patent: **25.09.1996**
(21) Application number: 91304125.7
(22) Date of filing: 08.05.1991
(51) Int. Cl.: C08L 27/12, C08K 3/32, C08K 3/40, C08K 3/04, C08K 7/06, C08K 7/14, F16C 33/20

(54) **A fluororesin composition suitable for use in a sliding member and a sliding member**
Fluorharzzusammensetzung zur Verwendung in einem Gleitwerkstoff und Gleitwerkstoff
Composition d'une résine fluorée à utiliser dans un matériau glissant et matériau glissant

(30) Priority: 09.05.1990 JP 119591/90; 18.01.1991 JP 16773/91
(43) Date of publication of application: 13.11.1991
(73) Proprietor: OILES CORPORATION, Minato-ku, Tokyo (JP)
(72) Inventor: Nakamaru, Takashi, Sagamihara-shi, Kanagawa-ken (JP); Watai, Tadashi, Ayase-shi, Kanagawa-ken (JP); Rokugawa, Masayuki, Hiratsuka-shi, Kanagawa-ken (JP); Tsunoda, Kouichi, Yamato-shi, Kanagawa-ken (JP); Umeki, Tadayoshi, Oiles Kogyo Kabushiki Kaisha, Kurita-gun, Shiga-ken (JP); Miyaji, Takayuki, Fujisawa-shi, Kanagawa-ken (JP); Yamada, Kenji, Fujisawa-shi, Kanagawa-ken (JP)
(74) Representative: Woods, Geoffrey Corlett

## Description

The present invention relates to a fluororesin composition suitable for use in a sliding member and to a sliding member comprising the fluororesin composition, which has an excellent sliding property, especially under conditions of low speed and high load (high surface pressure).

Polytetrafluoroethylene (which is abbreviated to "PTFE" hereinafter), which is a fluororesin, has not only excellent heat resistance and chemical resistance but also a low friction coefficient with a self-lubricating property, so that it is widely used in various fields as a so-called engineering plastic. It is used, for example, in sliding members such as bearings and gears, and molded articles such as tubes and valves. However, its wear resistance is not necessarily sufficient, and the deformation (creep) due to load is large, so that its use is restricted under high load or high temperature.

A sliding member consisting of PTFE is inferior in wear resistance and creep resistance. Depending on the use of the sliding member, for example, 1 by blending the PTFE with a filler such as graphite, molybdenum disulfide or glass fibers, or 2 by impregnating PTFE in and coating with PTFE on a porous sintered metal layer integrally formed on a thin steel plate, the above-mentioned drawbacks are reduced.

The sliding member of the above-mentioned embodiment 2 is a so-called multi-layer sliding member having a thin wall-thickness of the member itself (usually 1.5 to 3.0 mm) and has a greatly improved load resistance, so that it is suitable for use under conditions of low speed and high load.

However, when an opposite member (such as a shaft) is held with large grasping force (high surface pressure) and the rotation of the opposite member is smoothly supported with sliding (in other words, a portion in which clearance between the sliding member and the opposite member appears as a looseness) such as, for example, in a hinge of a door or a sliding portion of an automobile ball joint, creep of the sliding member itself occurs; as a result it cannot be used in this circumstance.

As sliding materials which overcome the above-mentioned problems there have been proposed, for example:
(1) a coated sheet as a bearing material comprising a metal net and a fluoropolymer sintered thereto, wherein intersectional wires of the metal net themselves are melted such that they are connected with each other by a thermal operation at intersectional portions (JP-B-35107-1078 corresponding to US-A-3899227); and
(2) a sliding member comprising as a base body an expanded metal comprising stainless steel or a phosphorous bronze alloy provided with regular networks, and a lubricating composition containing a polytetrafluoroethylene as a main component with 5 to 30% by weight of a phenol resin subjected to heat-treatment and/or an additional polymerization type polyimide resin as a filler, which is filled in the networks of the base member and coated on the base member (JP-A-79417/1989).
   Moreover, as sliding members containing a fluororesin as a main component, there have been proposed:
(3) a porous structural article having a tetrafluoroethylene resin coating at one surface produced by the following process:
   an unsintered tetrafluoroethylene resin mixture containing a liquid lubricant is placed on the surface of a porous structural article to be coated in a powder state as it is or in a state of having been molded beforehand so as to perform rolling and coating through between two rolls, a layer interposed from the surface of the roll at the side of contacting with its back surface to the surface of the roll is formed with a material which is soft and is allowed to enter into the surface of the porous structural article, and the resultant layer is rolled (JP-B-19053/1964);
(4) a lining foil comprising a metal textile, a fluoroplastic, and a material containing a reinforcing inorganic fiber material produced by the following process:
   a fluoroplastic filled with glass fibers or other inorganic fibers, preferably polytetrafluoroethylene or fluoroethylenepropylene, is rolled, extruded, or pressed in a form of powder, paste, or an unsintered subassembly on the metal textile at room temperature or above, and the obtained product is baked at a temperature of not less than the melting point of the fluorine polymer (JP-B-23740/1980);
(5) a sliding bearing member comprising an expanded metal having a thickness of 0.3 to 0.9 mm which comprises a wrought aluminum alloy having an elongation at breakage (δ₅) of 8 to 20% and a Brinell hardness (HB) of 35 to 65 and a matrix comprising 5 to 25% by volume of lead, 10 to 50% by volume of glass fibers and 40 to 80% by weight of polytetrafluoroethylene, wherein lozenge opening portions of said expanded metal are filled with said matrix, said expanded metal being coated with said matrix so that a friction sliding layer composed of said matrix is formed in a thickness of 0.01 to 0.3 mm and said matrix contains 10 to 50% by volume of zinc sulfide or barium sulfate having a particle size of 0.1 to 1.0 µm (JP-A-57919/1988 corresponding to US-A-4847135);
(6) a slide bearing comprising a rigid backing pad having a face, a metal mesh covering the face of the pad, means fixedly securing the mesh to the pad, and a sheet of a low friction bearing material overlaying the mesh and having a portion of its thickness pressed into the mesh to interlock the bearing material with the mesh (US-A-4238137);
(7) a sheet material sliding surface bearing, consisting of a network of expanded metal coated with a fluorine-containing polymer, wherein the network of expanded metal consists of a wrought aluminium alloy having an elongation at break δ₅ of 8 to 20% and a Brinell hardness HB of 35 to 65 and has a coating consisting of a blend of 5 to 25% by volume lead, 10 to 50% by volume glass fibers, and 40 to 80% by volume polytetrafluoroethylene (EP-B-40448); and
(8) a sheet material for sliding surface bearings comprising an expanded metal mesh composed of a wrought aluminium alloy having an elongation at break δ₅ of 8 to 20% and a Brinell Hardness Number HB of 35 to 65; a primer layer coating the surface of the expanded metal mesh having a thickness of 2 to 10 micrometers; and on the primer layer a composition composed of 10 to 30 wt.% of a filler for improving the thermal conductivity and wear resistance, 10 to 30 wt.% glass fibers and 40 to 80 wt.% polytetrafluoroethylene (PTFE) (US-A-4624887).

Conventionally, in order to improve the wear resistance and creep resistance, trials have been done in which various fillers such as glass fibers, glass beads, carbon fibers and carbon powder are added.

However, since the hardness of fillers such as glass fibers is high, these fillers sometimes damage the opposite member and furthermore the PTFE itself is cut and removed, so that there is a risk that abrasive wearing will occur. As a result, depending on the amount of the filler, there is the drawback that wear increases.

Also, a sliding member having a metal network structure as a base member becomes sufficiently intimate with the surface of the opposite member owing to the flexibility generated in its thickness direction. This means that use is possible without generating the creep of the member in the use in which the opposite member is held with large grasping force and rotation of the opposite member is smoothly supported.

Depending on the use of the sliding member, for example, when a charge-preventing effect is required in a sliding portion of OA equipment and when in a door hinge, painting of exterior portions is carried out after assembling the sliding member to the portion. Conductivity may be required for the sliding member.

It has surprisingly been found that by adding glass fibers, glass powder, carbon fibers and/or carbon powder as a filler, and a particular phosphate to a fluororesin such as polytetrafluoroethylene, mixing homogeneously to obtain a fluororesin composition, a sliding member comprising the composition exhibits a stable performance with a low friction coefficient showing no damage of an opposite member at all during sliding and has a charge-preventing effect and conductivity. The composition can, for example, be pressed and molded at the normal temperature of 300 to 600 kg/cm², and baked under the normal pressure of 360 to 380°C.

The present invention provides a fluororesin composition which comprises:
(i) a fluororesin,
(ii) at least one filler selected from glass fibers, glass powder, carbon fibers and carbon powder, and
(iii) a phosphate selected from Li₃PO₄, Li₂HPO₄, Li₄P₂O₇, Ca₃(PO₄)₂, Ca₂P₂O₇, CaHPO₄(.2H₂O) and hydroxyapatite,
wherein if the filler is selected from glass fibres and glass powder it is present in an amount of from 1 to 40% by weight, if the filler is selected from carbon fibres and carbon powder it is present in an amount of from 1 to 30% by weight, and the phosphate is present in an amount of from 0.1 to 15% by weight, all the above weights being relative to the total weight of the composition.

The present invention also provides a sliding member which is obtainable by pressing and molding a fluororesin composition as defined above, and baking the thus obtained green compact.

The present invention additionally provides a sliding member comprising a metal network structure, or a porous sintered metal layer formed on a steel back plate, as a base member and a fluororesin composition as defined above filled in the networks or impregnated in the porous sintered metal layer and coated on a surface of the base member.

A fluororesin composition comprising polytetrafluoroethylene, from 5 to 30% by weight of carbon fiber as the filler and from 0.1 to 15% by weight of the phosphate may, for example, be filled in the networks and coated on the surface of the metal network structure or impregnated in and coated on the porous sintered metal layer.

Fig. 1 to Fig. 4 are figures showing the wear depth in thrust tests of fluororesin compositions.

In Fig. 1 there are shown measurements wherein various amounts of anhydrous calcium hydrogenphosphate are further contained in a PTFE (Fluon G 190) which contains 15% by weight of glass fibers (MFA).

In Fig. 2 there are shown measurements wherein various amounts of glass fibers (MFA) are further contained in the same PTFE which contains 5% by weight of calcium hydrogenphosphate (anhydrous).

In Fig. 3 there are shown measurements wherein various amounts of calcium pyrophosphate are further contained in the same PTFE which contains 15% by weight of CF (Zyrous) treated at a high temperature.

In Fig. 4 there are shown measurements wherein various amounts of CF (Zyrous) treated at a high temperature are further contained in the same PTFE which contains 5% by weight of calcium pyrophosphate.

Fig. 5 is a plan view showing a network structure (expanded metal) as a base member, Fig. 6 is a cross-sectional view taken along the line VI-VI in Fig. 5, and Fig. 7 is a cross-sectional view showing a sliding member.

Examples of the fluororesin used in the present invention are conventionally known PTFE (polytetrafluoroethylene), FEP (tetrafluoroethylene-hexafluoropropylene copolymer) and PFA (tetrafluoroethylene-perfluoroalkylether copolymer). PTFE is especially preferable. PTFE is a homopolymer of tetrafluoroethylene, which is one kind of fluororesin commercially available under trademarks and trade names such as Argoflon (produced by Montedison S.p.A.), Teflon (produced by E.I. du Pont de Nemours & Company), Fluon (produced by ICI Ltd.), Polyflon (produced by Daikin Industries, Ltd.), Teflon 6CJ and Teflon 6J (produced by Mitsui du Pont Fluorochemical, Co., Ltd.), Fron CD-01, CD-123, CD-076, CD-126, and CD-4 (produced by Asahi Glass Co., Ltd.), and Polyflon F103, F101, F101E, and F201 (produced by Daikin Industries, Ltd.), which are resins capable of being used in compression molding but incapable of being used in ordinary injection molding.

The glass fibers or glass powder to be used as the filler for the fluororesin composition of the present invention include glass fibers and glass powder which have been usually used in the technical field, namely amorphous silicate glass or borate glass, and further includes, for example, wollastonite and potassium titanate whiskers.

Glass fibers having a diameter (⌀) of 1 to 20 µm , especially 8 to 12 µm, are preferable.

The length (ℓ) of the glass fibers is preferably 20 µm to 1 mm, 50 to 300 µm being especially preferable. In addition, it is preferable for the aspect ratio to be not less than about 5:1.

As the glass powder there can be used a known powder which has been hitherto used in the art. The average particle size of the glass powder is preferably 1 to 50 µm, more preferably 5 to 30 µm.

The carbon fibers (CF) which can be used as the filler in the fluororesin composition of the present invention gives a conductivity to the fluororesin composition. Preferred carbon fibers (CF) are pitch type carbon fibers treated at a low temperature (about 1000 to 1500°C), pitch type carbon fibers treated at a high temperature (about 2000 to 2500°C), PAN type carbon fibers and phenol type carbon fibers. From the view point of giving a high conductivity to the fluororesin composition, the pitch type carbon fibers treated at a high temperature are most preferred.

The diameter (⌀) and the fiber length (ℓ) of the carbon fibers are preferably 1 to 20 µm and 30 µm to 3 mm respectively, more preferably 8 to 12 µm and about 80 to 120 µm respectively.

A concrete example of pitch type carbon fibers is Zyrous (trade name) (⌀=12 µm, 1=100 µm) produced by Nitto Boseki Co., Ltd. A concrete example of PAN type carbon fibers is Pyrofil produced by Mitsubishi Rayon Co., Ltd., and a concrete example of phenol type carbon fibers is Kainol CF16BT produced by Japan Kainol Co., Ltd.

Preferred examples of the carbon powder which can be used as the filler in the present invention are Bellpearl C600 (obtained by treating Bellpearl R800 at 600°C) and Bellpearl C2000 (obtained by treating Bellpearl R800 at 20000°C), which are spherical phenol resin particles produced by Kanebo Ltd. In addition, pre-calcined coke having an average particle size of 11 to 16 µm is a preferred carbon powder.

The average particle size of the carbon powder is preferably 1 to 40 µm, more preferably 5 to 30 µm.

The amount of the filler used in the present invention in order to give a suitable wear resistance and creep resistance, in the case of the glass fibers and the glass powder, is 1 to 40% by weight, especially 5 to 30% by weight, and in the case of the carbon fibers and the carbon powder, is to 30% by weight, preferably 2 to 20% by weight, especially 5 to 20% by weight. All of these figures are relative to the total weight of the composition.

Li₃PO₄, Li₂HPO₄, Li₄P₂O₇, Ca₃(PO₄)₂, Ca₂P₂O₇, CaHPO₄(·2H₂O) and hydroxyapatite represented by the formula Ca₁₀(PO₄)₆(OH)₂ are used as the phosphate in the present invention.

A phosphate having an average particle size of not more than 20 µm for mixing homogeneously is preferred.

For phosphates containing water of crystallization, by performing heat treatment beforehand at a temperature of more than the baking temperature of the fluororesin composition of the present invention, that is at a temperature exceeding about 360 to 380°C, the water of crystallization can be evaporated off. As a result evaporation of the water of crystallization can be prevented during the above-mentioned baking treatment, thereby preventing crack formation in the molded article obtained.

The amount of the phosphate added, in order to increase the wear resistance, is 0.1 to 15% by weight especially 3 to 10% by weight, relative to the total weight of the composition.

The total amount of the filler and the phosphate in the fluororesin composition of the present invention preferably is not more than 40.1% by weight relative to the total weight of the composition.

The phosphate is not a substance showing a lubricating property such as, for example, graphite and molybdenum disulfide as it is. However, it facilitates the film forming property of a lubricating coating of the PTFE resin on the surface of an opposite member (sliding surface) during sliding with the opposite member after blending with the PTFE resin. Owing to the effect of the phosphate, direct contact (sliding) between the hard carbon fibers to be blended with the PTFE resin and the opposite member is prevented, and the drawback of the carbon fibers damaging the opposite member, thereby decreasing the wear resistance of the sliding member, is suppressed. This is an important requirement necessary for the sliding member to be used under the conditions of dry friction lubrication.

The phosphate used in the present invention has a Mohs hardness of 2 to 4. By an interaction of the phosphate with the filler having a Mohs hardness of 4 to 6, the wear of the opposite member or the fluororesin composition itself, which is caused by the filler, can be effectively suppressed.

The fluororesin composition of the present invention, in addition to comprising the filler such as the glass fibers and the phosphate, can optionally have added or mixed in other additives which are known in the art and are used in order to, for example, increase the molding property, the wear resistance and the load resistance, for example, molybdenum disulfide, graphite, other pigments and an agent for imparting, for example, conductivity.

The fluororesin composition of the present invention can preferably be used as a starting material for, for example, a bearing, a cam, a gear, a sliding plate or a liner tube for a flexible shaft.

In another embodiment of the sliding member of the present invention, the network structure which constructs the base member uses expanded metal or a metal mesh such as a metal network as disclosed in Japanese Patent Publication No. 35107 (1978).

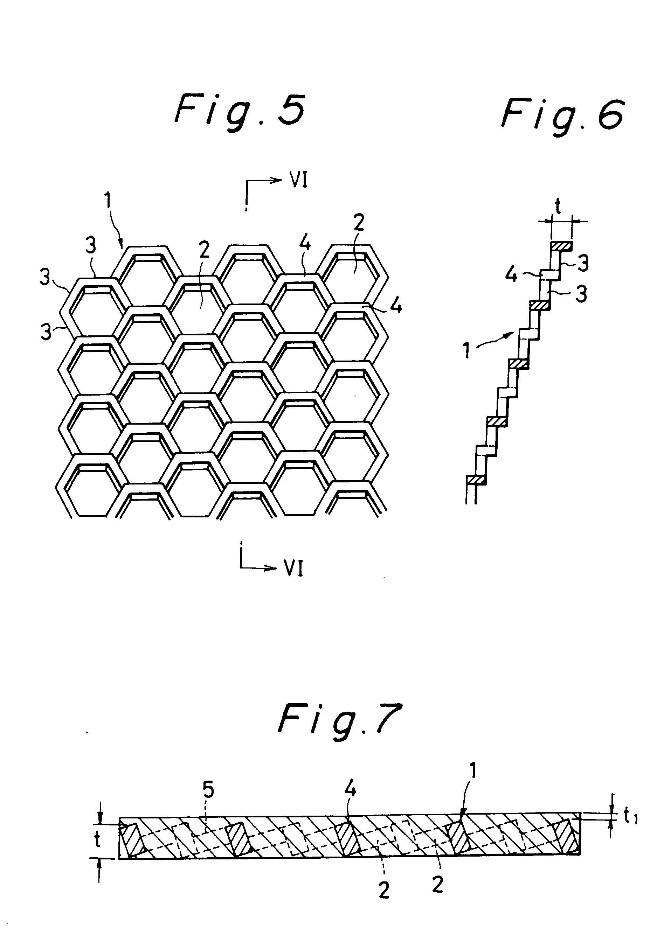

Fig. 5 is a plan view showing the expanded metal to be used as the base member, and Fig. 6 is a cross-sectional view taken along the line VI-VI in Fig. 5.

In both figures, 1 is expanded metal, 2 is a network, 3 is each side (strand) which forms the network 2, 4 is a connecting portion (bonding portion) of these strands with each other, and t is a thickness of the expanded metal.

The configuration of the network 2 of the expanded metal 1 shown in Fig. 5 is hexagonal. However, the configuration of the network 2 can be rhomboid, rectangular or any other polygonal. These can also be used as the base member.

The expanded metal 1 preferably has a length of each side of 0.1 to 1.5 mm and a thickness of 0.1 to 1.0 mm.

Preferred metal materials which construct the expanded metal are stainless steel, a phosphorous bronze alloy or a bronze alloy.

In addition, a preferred metal mesh is a woven assembled wire mesh which is formed by weaving thin wires of copper, a copper alloy, iron or an iron alloy having a wire diameter of 0.1 to 0.5 mm as the warp and the weft.

In still another embodiment of the sliding member of the present invention, the back plate is composed of a metal thin plate. A structural rolled steel thin plate is generally used. However, depending on the use of the sliding member, other steel thin plates or thin plates made of metals other then steel may be used. Those in which copper plating, for example, is applied on the metal thin plates in order to increase the corrosion resistance may also be used.

The porous sintered metal layer which is integrally formed on the back plate is formed from a copper alloy which has excellent friction resistance and wear resistance, such as bronze, lead bronze or phosphorous bronze. However, depending on the object and the use, it may be formed from other than the copper alloy, for example, from an aluminum alloy or iron. The particles of the alloy powder are preferably massive or irregular.

Examples of the conductive substance to be used in the sliding member of the present invention are amorphous carbon powder such as coke, anthracite, carbon black or charcoal, graphite carbon powder such as natural graphite, artificial graphite or Kish graphite, copper powder, nickel powder, and a soft metal powder such as lead, tin or indium.

Almost all of these conductive substances do not contribute to increasing the wear resistance, so that special attention is required for the blending ratios thereof.

In the present invention, a range within 0.1 to 10% by weight with respect to the above-mentioned lubricating composition (fluororesin composition) can give a higher conductivity to the lubricating composition without deteriorating the wear resistance.

One example of a production method of the sliding member will now be given.

### [Preparation of the lubricating composition (fluororesin composition)]

To a PTFE resin powder there are blended 1 to 40% by weight of carbon fibers, 0.1 to 15% by weight of the phosphate and optionally 0.1 to 10% by weight of a conductive substance. These are mixed at a temperature of not higher than the transition point at room temperature (19°C) of the PTFE resin to obtain a lubricating composition (fluororesin composition).

This mixing is carried out at a temperature of not higher than the transition point at room temperature (19°C) of the PTFE resin. Thus the fibrous formation of the PTFE resin is prevented without applying a shearing force to the PTFE resin, and a homogeneous mixture can be obtained.

### [Production of the sliding member]

[I] The fluororesin composition obtained as described above is pressed and molded at an ordinary temperature to produce a green compact.
   The molding pressure is preferably 300 to 800 kg/cm².
   The baking step of the green compact is carried out at an ordinary pressure at 360 to 380°C for 2 to 30 hours under conditions which depend on, for example, the type and amount of the fluororesin powder, so as to melt the fluororesin powder to fuse the resin mixture.
   Incidentally, mechanical processing can be carried out wherein that the member obtained by baking is cooled to room temperature followed by a conventional processing method, such as, for example, one using a lathe in which a superhard tool is used.
   Other production methods of sliding members of the present invention will be described hereinafter.
[II] (a) To 100 parts by weight of the lubricating composition (fluororesin composition) prepared by the above-mentioned method there is blended 15 to 25 parts by weight of a petroleum solvent. The composition is agitated and mixed to give a wetting property to the lubricating composition (fluororesin composition).
   As the petroleum solvent there are used naphtha, toluene, xylene, an aliphatic solvent, or an aliphatic and naphthenic mixed solvent. An example of a commercially available solvent is "Exonol" (trade name) produced by Exxon Chemical Co., Ltd., which is an aliphatic and naphthenic mixed solvent.
   When the petroleum solvent is blended with the lubricating composition, and agitated and mixed to give a wetting property to the lubricating composition, the agitation and mixing are carried out at a temperature of not higher than the transition point at room temperature (19°C) of the PTFE resin. This is done to prevent the effect that, when the solvent is added and agitated and mixed, kneading is applied to the PTFE resin which results in fibrous formation of the PTFE resin, resulting in a considerable reduction of the molding property of the lubricating composition.
   When the blending ratio of the petroleum solvent to the lubricating composition is less than 15 parts by weight, the casting property of the lubricating composition is bad in the filling and coating steps to a base member of a network structure as described hereinafter, and nonuniformity is apt to occur during filling of the base member to networks. In addition, when the blending exceeds 25 parts by weight, the filling and coating operations become difficult to carry out, and the uniformity of the coating thickness is reduced. The contacting strength between the lubricating composition and the base member becomes bad.
   (b) The lubricating composition (fluororesin composition) to which the wetting property has been given is sprayed and supplied on the base member of the network structure, which is subjected to roller application to fill the networks of the base member with the lubricating composition. A uniform coating layer of the lubricating composition is formed on the surface of the base member, and the member is then maintained for several minutes in a dry furnace heated to a temperature of 200 to 250°C to scatter and eliminate the petroleum solvent.
   (c) The base member with the networks and the surface filled and coated with the lubricating composition (fluororesin composition) is introduced into a furnace and heated for several minutes or ten-odd minutes at a temperature of 360 to 380°C to bake the lubricating composition. The baked member is removed from the furnace and thereafter passed through a roller to adjust the nonuniformity of size, thereby obtaining a sliding member.
   The sliding member thus obtained is shown in Fig. 7. In the figure, 5 is the lubricating composition (fluororesin composition) formed by filling the networks 2 of the base member 1 of the network structure (expanded metal) to be the coating layer at the surface. t₁ represents the thickness of the coating layer. Though dependant on the use, a thickness of 0.05 mm to 1.0 mm is usually preferable.
[III] (a') The lubricating composition (fluororesin composition) to which the wetting property has been given is sprayed and supplied on a porous sintered metal layer formed on the back plate, and is rolled with a roller to impregnate the lubricating composition in the sintered layer. In this way a uniform coating layer of the lubricating composition is formed on the surface of the sintered layer. In this step, the lubricating composition is coated with a thickness which is 2 to 2.5 times the resin coating thickness required for the final product. Almost all of the filling of the resin into cavities of the porous sintered metal layer occurs in this step.
   (b') The back plate in which the lubricating composition (fluororesin composition) is impregnated in and coated on the porous sintered metal layer is maintained for several minutes in a dry furnace heated to a temperature of 200 to 250°C to scatter and eliminate the petroleum solvent. The dried lubricating composition layer is then pressed with an applied pressure of about 300 to 600 kg/cm² by a roller to obtain a predetermined thickness.
   (c') The back plate provided with the dried lubricating composition layer having been pressed by the roller is introduced into a heating furnace to heat for several minutes or ten-odd minutes at a temperature of 360 to 380°C, thereby baking it. The baked member is removed from the furnace and thereafter passed through the roller again to adjust the nonuniformity of size.
   (d') After the size adjustment, the back plate in which a sliding face layer has been formed is cooled, and then is optionally passed through a correcting roller so as to correct undulation of the back plate, thereby obtaining the desired multi-layer sliding member.

After cutting the multi-layer sliding member to a suitable size, it can be used as a sliding plate in a state of a planar plate. In addition, after roundly bending, it can be used as a cylindrical wound bush.

As clarified by Examples 1 to 19 described hereinafter, by containing a suitable amount of the phosphate, in the case of using a hollow cylindrical shaft material (SUS304) as an opposite member at a speed of 11 m/min with a load of 40 kg/cm² and a testing period of 8 hrs in a dry state, the wear amount of the sliding member of the present invention is decreased by at least 25%, preferably decreased by 40%, more preferably decreased by 50%, as compared with that of a sliding member containing no phosphate.

As clarified by Examples 21 to 23 described hereinafter, the sliding member in which the fluororesin composition containing the phosphate is filled and coated in the networks and on the surface of the metal network structures has a friction coefficient of not more than 0.20, preferably of not more than 0.15, and a wear amount of not more than 0.10 mm, preferably of not more than 0.08 mm, which is excellent wear resistance, in the case of using mechanical structural carbon steel (S45C) as an opposite member at a speed of 5 m/min with a load of 100 fkg/cm² and a testing period of 8 hrs in a state of no lubrication.

In addition, as clarified by Examples 24 to 26 described hereinafter, the sliding member in which the fluororesin composition containing the phosphate is formed on the porous sintered metal layer formed on the steel back plate has a friction coefficient of not more than 0.20, preferably of not more than 0.15, and a wear amount of not more than 30 µm, preferably of not more than 25 µm, more preferably of not more than 20 µm, which is excellent wear resistance, in the case of using mechanical structural carbon steel (S45C) as an opposite member at a speed of 11 m/min with a load of 100 kgf/cm² and a test period of 8 hrs in a state of no lubrication.

Therefore, the lubricating composition, which is filled and coated in the networks and on the surface of the base member of the network structure, can be used without providing settling of the member in such a sliding usage that it exhibits a stable performance with a low friction coefficient with no damage of the opposite member during sliding with the opposite member. It becomes intimate with the surface of the opposite member well owing to the flexibility provided in the thickness direction of the base member, grasps the opposite member with a great holding force, and smoothly supports the rotation and the like of the opposite member.

The lubricating composition which is filled in and coated on the networks and on the surface of the base member has a charge-preventing effect and conductivity, so that no means for specially providing conductivity are necessary in the application step which is carried out after assembling the sliding member to sliding portions of various OA equipment. This results in a great enlargement of the range of possible uses.

The lubricating composition which is impregnated in and coated on the porous sintered metal layer formed on the back plate exhibits a stable performance with a low friction coefficient with no damage of the opposite member during sliding with the opposite member.

The lubricating composition which is impregnated in and coated on the porous sintered metal layer formed on the back plate has conductivity, so that it can be used for a sliding portion in various OA equipment in which a charge-preventing effect is required. This results in a great enlargement of the range of possible uses.

The present invention is now further explained in the following Examples and Comparative Examples.

### Examples 1 to 19 and Comparative Examples A to F

Various phosphates and fillers were mixed with PTFE in the ratios shown in Table 1. These were homogeneously mixed in a Henshell mixer, and the mixed powder was charged into a mold to perform molding at an ordinary temperature under a molding pressure of 500 kg/cm², thereby obtaining a green compact. The green compact was baked under an ordinary pressure at 370°C for 5 hours to form a molded raw material. The baked member was cooled to room temperature and subsequently processed to obtain a plate-shaped sliding member sample piece having sides 30 mm × 30 mm × thickness 5 mm.

This was contacted with sliding with an end face of a hollow cylindrical shaft material (inner diameter 20 mm × outer diameter 25.6 mm, material quality: SUS 304) under the following conditions to carry out a thrust test.

Test condition:
- Speed :: 11 m/min
- Load :: 40 kg/cm²
- Period :: 8 hr
- Lubrication :: dry

The friction coefficient is shown as a changing value 1 to 8 hours after the start of the test.

The results are shown in Table 1.

As clarified in Table 1, the fluororesin composition containing the glass fibers and the like as the filler in a suitable amount and the phosphate used in the present invention, has a considerably improved wear resistance property.

### Comparative Example I

A plate-shaped sliding member was prepared by the same procedures as described in Example 1, except for using no phosphate.

The wear amount and friction coefficient of the prepared member are shown in Table 1.

### Example 20

The effect of adding various amounts of the phosphate and the filler on the wear resistance of the fluororesin composition of the present invention was investigated. The conditions of the thrust test were the same as described above.

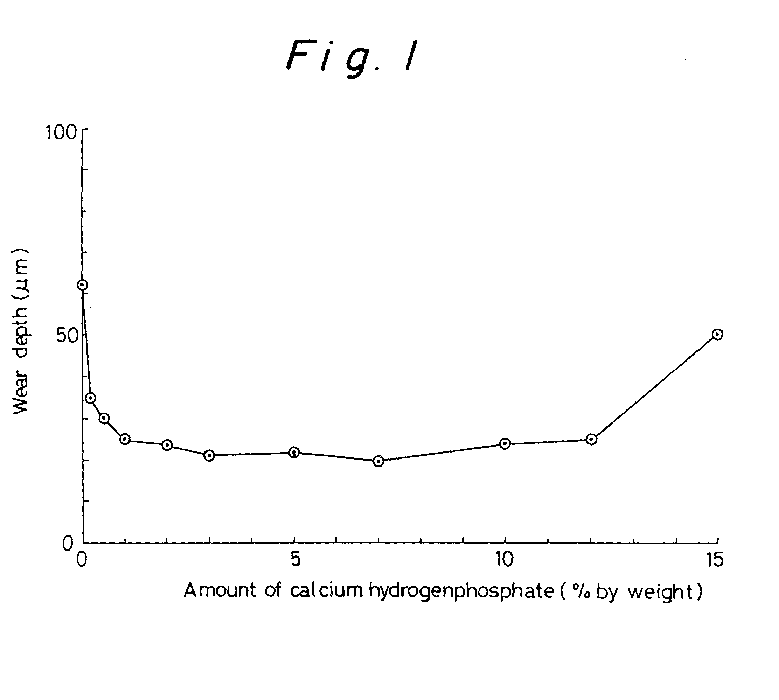

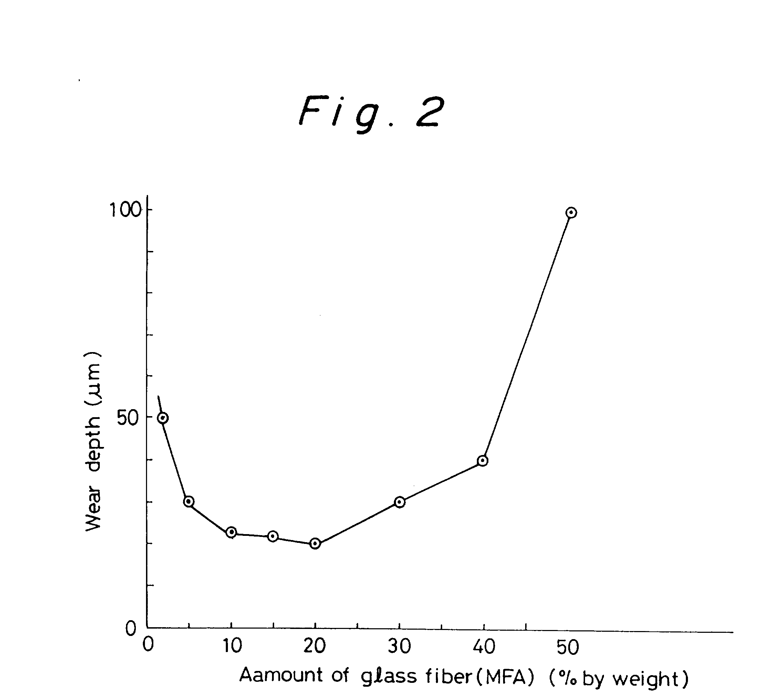

The results obtained are shown in Fig. 1 to Fig. 4. As clarified in Fig. 1 and Fig. 2, the amounts of the glass fibers and the phosphate added are suitably 1 to 40% by weight and 0.1 to 15% by weight, respectively.

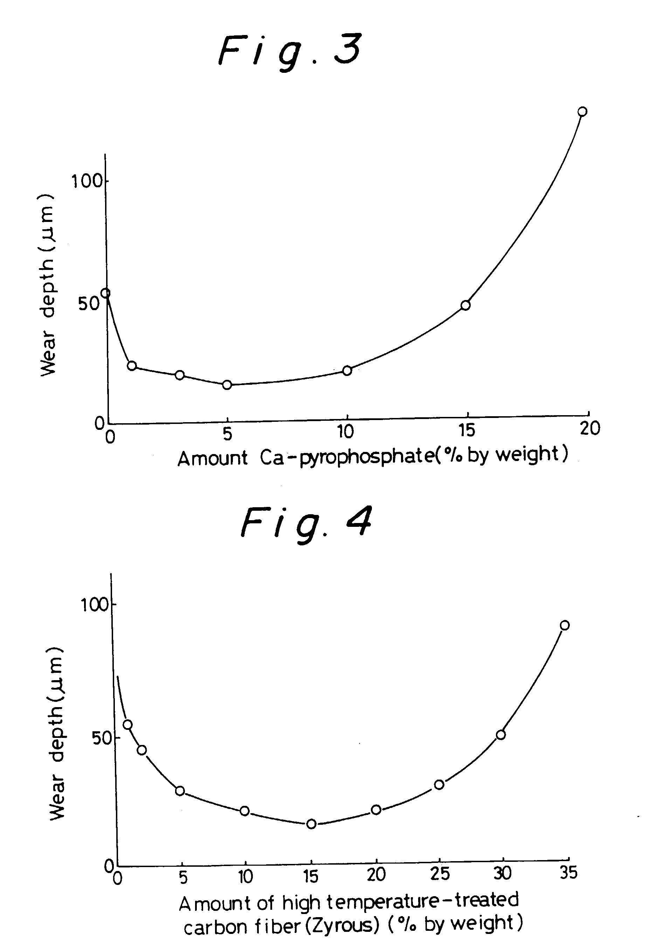

From Fig. 3 and Fig. 4 the amounts of the carbon fibers and the phosphate added are suitably 1 to 30% by weight and 0.1 to 15% by weight, respectively.

### Example 21

### (Base member)

A phosphorous bronze alloy plate having a plate thickness of 0.3 mm was subjected to expanding processing to form an expanded metal having a thickness of 0.43 mm provided with hexagonal regular networks having a length of each side (strand) of 0.6 mm, which was used as a base member.

(In Fig. 5, the length of the symbol 3 was 0.6 mm, and in Fig. 6, the thickness of the symbol t was 0.43 mm.)

### (Lubricating (fluororesin) composition)

As the PTFE resin there was used "Teflon 6CJ" (produced by Mitsui du Pont Fluorochemical Co., Ltd.) having an average particle size of not more than 80 µm. 65 to 90% by weight of this PTFE resin powder, 5 to 30% by weight of carbon fibers having a diameter of 10 µm and a length of 100 µm ("Zyrous GPMF100JL" produced by Nitto Boseki Co., Ltd.) and 5% by weight of calcium pyrophosphate passing through a 350 mesh (Ca₂P₂O₇: produced by Kanto Chemical Co., Ltd.) as a phosphate were introduced into a Henshell mixer, and were mixed at a temperature of not more than the transition point at room temperature of the PTFE resin to obtain lubricating compositions.

### (Production steps)

(a) To 100 parts by weight of this lubricating composition there was blended 20 parts by weight of an aliphatic and naphthenic mixed solvent ("Exol" produced by Exxon Chemical Co., Ltd.) as a petroleum solvent. These were mixed at a temperature of not more than the transition point at room temperature of the PTFE resin to give a wetting property to the lubricating composition.
(b) The lubricating composition to which the wetting property had been given was scattered and supplied on the base member of the above-mentioned expanded metal, and was subjected to roller application to fill the networks of the base member with the lubricating composition and form a uniform coating layer of the lubricating composition on the surface of the base member. This was followed by maintaining the member for 5 minutes in a dry furnace heated to a temperature of 220°C, thereby scattering and eliminating the petroleum solvent in the lubricating composition.
(c) The base member in which the networks and the surface were filled and coated with the lubricating composition was introduced into a heating furnace, and was heated for 10 minutes at a temperature of 360°C to bake the lubricating composition. The member was then removed from the furnace to become a sliding member.

The thickness of the surface coating layer of the lubricating composition of the sliding member thus obtained was 0.13 mm (the thickness of symbol t₁ in Fig. 7).

The component composition of the lubricating composition which constructs the sliding member of this Example 21 is shown in Table 2.

### Example 22

### (Base member)

As a base member there was used the same expanded metal as that of Example 21.

### (Lubricating (fluororesin) composition)

The PTFE resin used was "Teflon 6CJ" (produced by Mitsui du Pont Fluorochemical Co., Ltd.) having an average particle size of not more than 80 µm. 75 to 85% by weight of this PTFE resin powder, 10 to 20% by weight of carbon fibers having a diameter of 10 µm and a length of 100 µm ("Zyrous GPMF100JL" produced by Nitto Boseki Co., Ltd.) and 5% by weight of lithium pyrophosphate passing through a 350 mesh (Li₄P₂O₇: produced by Kanto Chemical Co., Ltd.) as a phosphate were introduced into a Henshell mixer, and were mixed at a temperature of not more than the transition point at room temperature of the PTFE resin to obtain lubricating compositions.

Production was then carried out with the production steps (a), (b) and (c), which were the same as those of Example 22 to obtain sliding members.

The component composition of the lubricating composition which constructs the sliding member of this Example 22 is shown in Table 2.

### Example 23

### (Base member)

As a base member there was used the same expanded metal as that of Example 21.

### (Lubricating (fluororesin) composition)

The PTFE resin used was "Teflon 6CJ" (produced by Mitsui du Pont Fluorochemical Co., Ltd.) having an average particle size of not more than 80 µm. 72 to 87% by weight of this PTFE resin powder, 5 to 20% by weight of carbon fibers having a diameter of 10 µm and a length of 100 µm ("zyrous GPMF100JL" produced by Nitto Boseki Co., Ltd.), 5% by weight of calcium pyrophosphate passing through a 350 mesh (produced by Kanto Chemical Co., Ltd.) as a phosphate, and 3% by weight of carbon black (CB3750: produced by Mitsubishi Chemical Industries Ltd.) as a conductive substance were introduced into a Henshell mixer, and were mixed at a temperature of not more than the transition point at room temperature of the PTFE resin to obtain lubricating compositions.

Production was then carried out with the production steps (a), (b) and (c), which were the same as those of Example 21 to obtain a sliding member.

The component composition of the lubricating composition which constructs the sliding member of this Example 23 is shown in Table 2.

### Comparative Example II

### (base member)

As a base member there was used the same expanded metal as that of Example 21.

### (Lubricating composition)

As the PTFE resin there was used "Teflon 6CJ" (produced by Mitsui du Pont Fluorochemical Co., Ltd.) having an average particle size of not more than 80 µm. 70% by weight of this PTFE resin powder and 30% by weight of carbon fibers having a diameter of 10 µm and a length of 100 µm were introduced into a Henshell mixer, and were mixed at a temperature of not more than the transition point at room temperature of the PTFE resin to obtain lubricating compositions.

Production was then carried out with the production steps (a), (b) and (c) which were the same as those of Example 21 to obtain a sliding member.

The component composition of the lubricating composition which constructs the sliding member of this Comparative Example II is shown in Table 2.

Results of tests will now be described for the friction and wear resistance and the volume resistivity (Ω·cm) of the sliding members obtained in Examples 21 to 23 and Comparative Example II.

### [Friction and wear resistance]

With respect to the friction and wear resistance test, the following sliding conditions were used.

### (Sliding conditions)

- Sliding speed :: 5 m/min
- Load :: 100 kgf/cm²
- Test period :: 8 hours
- Lubrication :: no lubrication
- Companion member :: mechanical structural carbon steel (S45C)

With respect to the friction coefficient, a changing value of the friction coefficient from the start of the test to the end of the test is shown, and with respect the wear amount, the wear amount after 8 hours was measured.

### [Volume resistivity]

The volume resistivity in the direction perpendicular to each sliding member surface was measured by the four probe resistivity measuring method using a resistivity meter (Lolester AP Mcp-T400 produced by Mitsubishi Petrochemical Co., Ltd.).

The friction and wear resistance and the volume resistivity of each sliding member are shown in Table 2. According to the test results in Table 2, the sliding members of Example 21 to Example 22 exhibited a stable performance throughout the test period with low friction coefficients and had extremely small wear amounts of the sliding members after the tests.

Although the sliding member of Example 21-vi contained 30% by weight of carbon fibers, no damage was found on the surface of the opposite member after the test.

In addition, values of 10⁸ to 10⁻³ were presented for the volume resistivity.

Sufficiently satisfactory performance has been provided after considering the facts that generally with respect to the charge-preventing effect required for sliding portions of OA equipment, the volume resistivity is not more than 10⁸, and with respect to the conductivity required in an exterior painting step carried out in a painting line after assembling a sliding member to a door hinge, the volume resistivity is not more than 10³.

On the other hand, the sliding member of the Comparative Example II is an excellent material with regards to the charge-preventing effect and conductivity. however, with respect to the friction and wear resistance, the friction coefficient is high, and with respect to the wear amount, even the base member is invaded, and much thin stripe-shaped damage was found on the surface of the opposite member.

As described above, in the examples an expanded metal has been used as the base member of the network structure. However, even when a metal mesh which is formed by weaving thin metal wires as the base member in the warp and the weft is used, the same effect can be obtained.

### Example 24

As the PTFE resin there was used "Teflon 6CJ" (produced by Mitsui du Pont Fluorochemical Co., Ltd.) having an average particle size of not more than 80 µm. 65 to 90% by weight of this PTFE resin powder, 5 to 30% by weight of CF having a diameter of 12 µm and a length of 100 µm ("Zyrous GPMF100JL" produced by Nitto Boseki Co., Ltd.) and 5% by weight of calcium pyrophosphate passing through a 350 mesh (produced by Kanto Chemical Co., Ltd.) as a phosphate were introduced into a Henshell mixer for grinding and mixing. With respect to 100 parts by weight of the mixed powder, as a petroleum solvent there was blended 20 parts by weight of an aliphatic and naphthenic mixed solvent ("Exol" produced by Exxon Chemical Co., Ltd.). These were mixed at a temperature of not more than the transition point at room temperature of the PTFE resin to obtain wetting lubricating compositions.

The wetting lubricating composition was supplied on a porous sintered metal layer formed on a steel back plate of a metal thin plate, and was rolled with a roller to obtain a multi-layer plate of a thickness of 1.20 mm. The multi-layer plate was maintained for 5 minutes in a hot air dry furnace heated to a temperature of 200°C to scatter and eliminate the solvent. This was followed by pressing the dry lubricating composition layer with a pressing pressure of 400 kg/cm² by a roller to give a thickness of 1.05 mm.

Next, the multi-layer plate was introduced into a heating furnace to heat and bake it at a temperature of 370°C for 10 minutes, followed by pressing by a roller again. Size adjustment and correction of undulation of the plate and the like were carried out. This was followed by cutting to obtain a plate-shaped sliding member test piece having sides 30 mm x 30 mm x thickness 1.05mm.

The component composition of the lubricating composition which constructs the sliding member of Example 24 is shown in Table 3.

### Example 25

As the PTFE resin there was used "Teflon 6CJ" (produced by Mitsui du Pont Fluorochemical Co., Ltd.) having an average particle size of not more than 80 µm. 75 to 82% by weight of this PTFE resin powder, 15% by weight of CF having a diameter of 12 µm and a length of 100 µm and 3 to 10% by weight of lithium pyrophosphate passing through a 350 mesh (produced by Yoneyama Chemical Industries Co., Ltd.) as a phosphate were introduced into a Henshell mixer for grinding and mixing. With respect to 100 parts by weight of the mixed powder, as a petroleum solvent there was blended 20 parts by weight of an aliphatic and naphthenic mixed solvent ("Exol" produced by Exxon Chemical Co., Ltd.). These were mixed at a temperature of not more than the transition point at room temperature of the PTFE resin to obtain wetting lubricating compositions.

Production was then carried out with the same production steps as those of Example 24 to obtain a plate-shaped sliding member test piece having sides 30 mm × 30 mm × thickness 1.05 mm.

The component composition of the lubricating composition which constructs the sliding member of Example 25 is shown in Table 3.

### Example 26

As the PTFE resin there was used "Teflon 6CJ" (produced by Mitsui du Pont Fluorochemical Co., Ltd.) having an average particle size of not more than 80 µm. 73 to 88% by weight of this PTFE resin powder, 5 to 20% by weight of CF having a diameter of 12 µm and a length of 100 µm, 5% by weight of calcium pyrophosphate passing through a 350 mesh (produced by Kanto Chemical Co., Ltd.) as a phosphate, and 2% by weight of carbon black (produced by Mitsubishi Chemical Industries Ltd.: CB3750, hereinafter referred to as "CB") as a conductive substance were introduced into Henshell mixer for grinding and mixing. With respect to 100 parts by weight of the mixed powder, as a petroleum solvent there was blended 20 parts by weight of an aliphatic and naphthenic mixed solvent ("Exol" produced by Exxon Chemical Co., Ltd.). These were mixed at a temperature of not more than the transition point at room temperature of the PTFE resin to obtain wetting lubricating compositions.

Production was then carried out with the same production steps as those of Example 24 to obtain a plate-shaped sliding member test piece having sides 30 mm × 30 mm × thickness 1.05 mm.

The component composition of the lubricating composition which constructs the sliding member comprising Example 26 is shown in Table 3.

### Comparative Example III

As the PTFE resin there was used "Teflon 6CJ" (produced by Mitsui du Pont Fluorochemical Co., Ltd.) having an average particle size of not more than 80 µm. 70 to 83% by weight of this PTFE resin powder, ① 30% by weight of CF having a diameter of 12 µm and a length of 100 µm, or ② 15% by weight of CF having a diameter of 12 µm and a length of 100 µm and 2% by weight of CB as a conductive substance were introduced into a Henshell mixer for grinding and mixing. With respect to 100 parts by weight of the mixed powder, as a petroleum solvent there was blended 20 parts by weight of an aliphatic and naphthenic mixed solvent ("Exol" produced by Exxon Chemical Co., Ltd.). These were mixed at a temperature of not more than the transition point at room temperature of the PTFE resin to obtain wetting lubricating compositions.

Production was then carried out with the same production steps as those of Example 24, to obtain a plate-shaped sliding member test piece having sides 30 mm × 30 mm × thickness 1.05 mm.

The component composition of the lubricating composition which constructs the sliding member of Comparative Example III is shown in Table 3.

Results of tests will now be described for the friction and wear resistance and the volume resistivity (Ω·cm) of the sliding members obtained in Examples 24 to 26 and Comparative Example III.

### [Friction and wear resistance]

With respect to the friction and wear resistance test, the following sliding conditions were used.

### (Sliding condition)

- Sliding speed :: 11 m/min
- Load :: 100 kgf/cm
- Test period :: 8 hours
- Lubrication :: no lubrication
- Companion member :: mechanical structural carbon steel (S45C)

With respect to the friction coefficient, a changing value of the friction coefficient after one hour after the start of the test is shown, and with respect the wear amount, the wear amount after 8 hours of the test period was measured.

### [Volume resistivity]

The volume resistivity in the direction perpendicular to each sliding member surface was measured by the four probe resistivity measuring method using a resistivity meter (Lolester AP Mcp-T400 produced by Mitsubishi Petrochemical Co., Ltd.).

The friction and wear resistance and the volume resistivity of each sliding member are shown in Table 3.

According to the test results, the sliding members of Example 24 to Example 26 exhibited a stable performance throughout the test period with low friction coefficients and had extremely small wear amounts of the sliding members after the tests.

Although the sliding member of Example 24-vi contained 30% by weight of CF, no damage was found on the surface of the opposite member after the test.

In addition, values of 10⁸ to 10⁻¹ were presented for the volume resistivity.

Sufficiently satisfactory performance has been provided after considering the fact that generally with respect to the conductivity required for sliding portions of OA equipment, the volume resistivity is not more than 10⁸.

On the other hand, the sliding members of Comparative Example III are very excellent materials with regard to the conductivity. However, with respect to the friction and wear resistance, the friction coefficients are high, and wear amounts are also large, and much thin stripe-shaped damage was found on the surface of the opposite member.

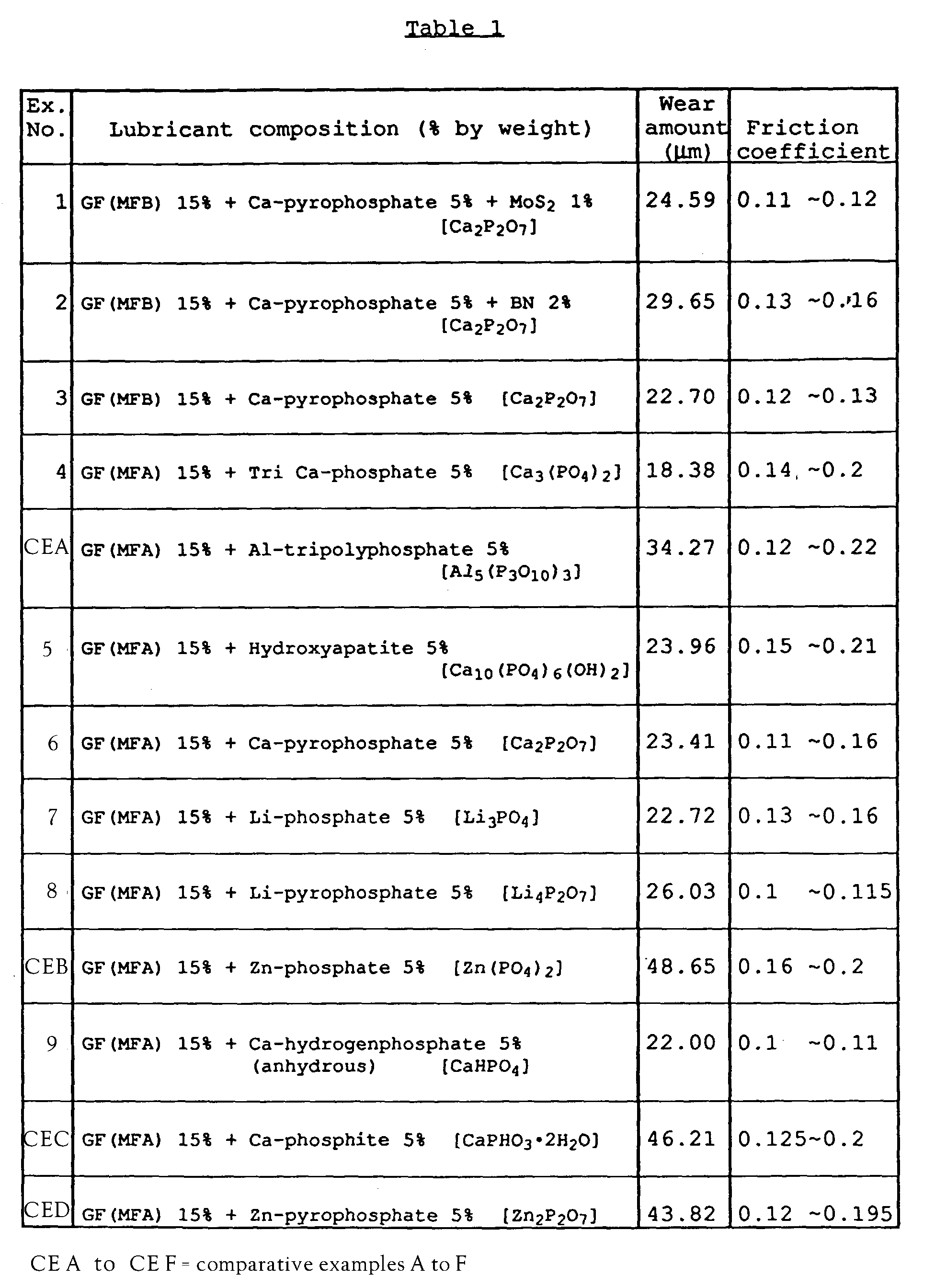

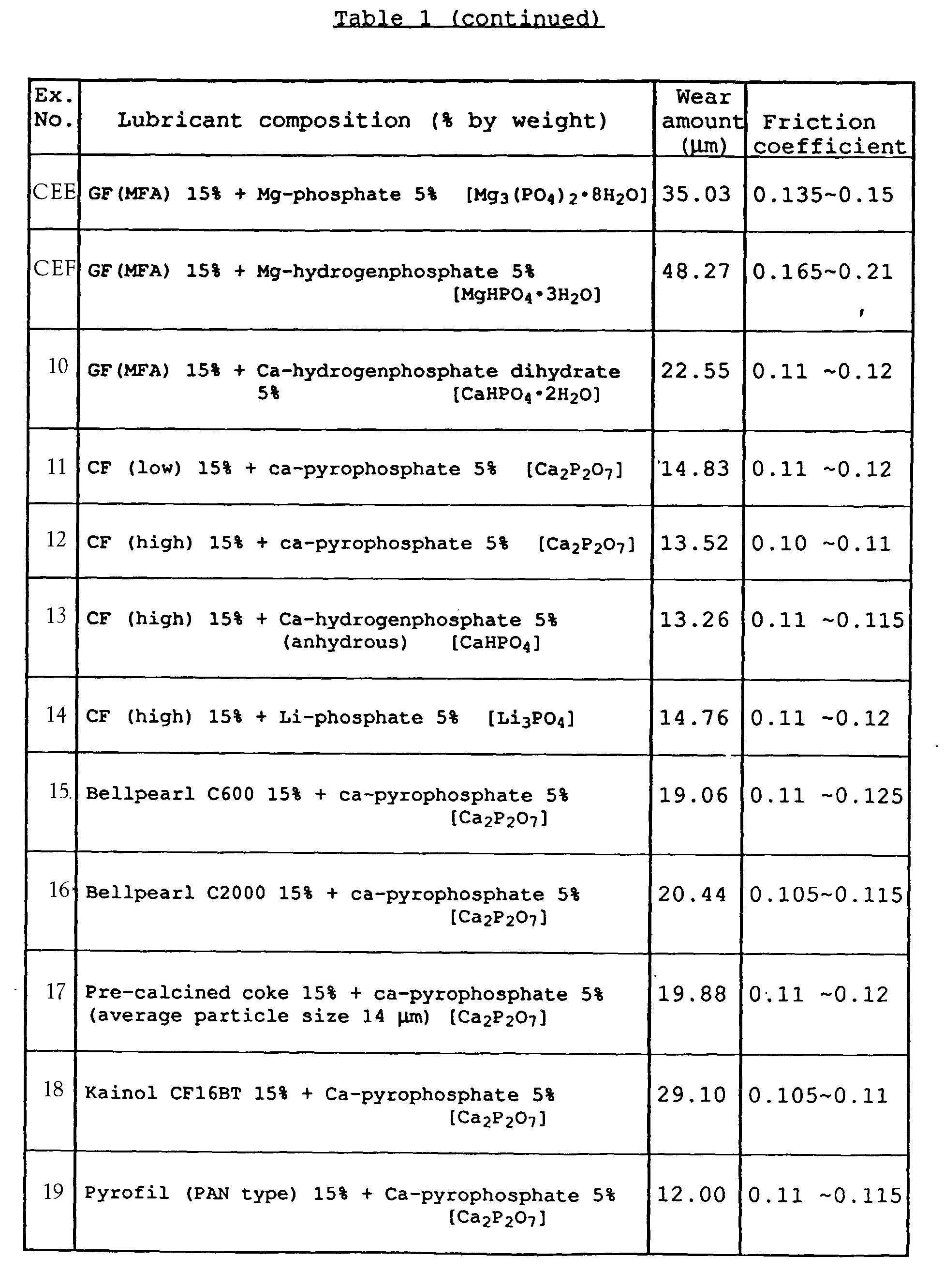

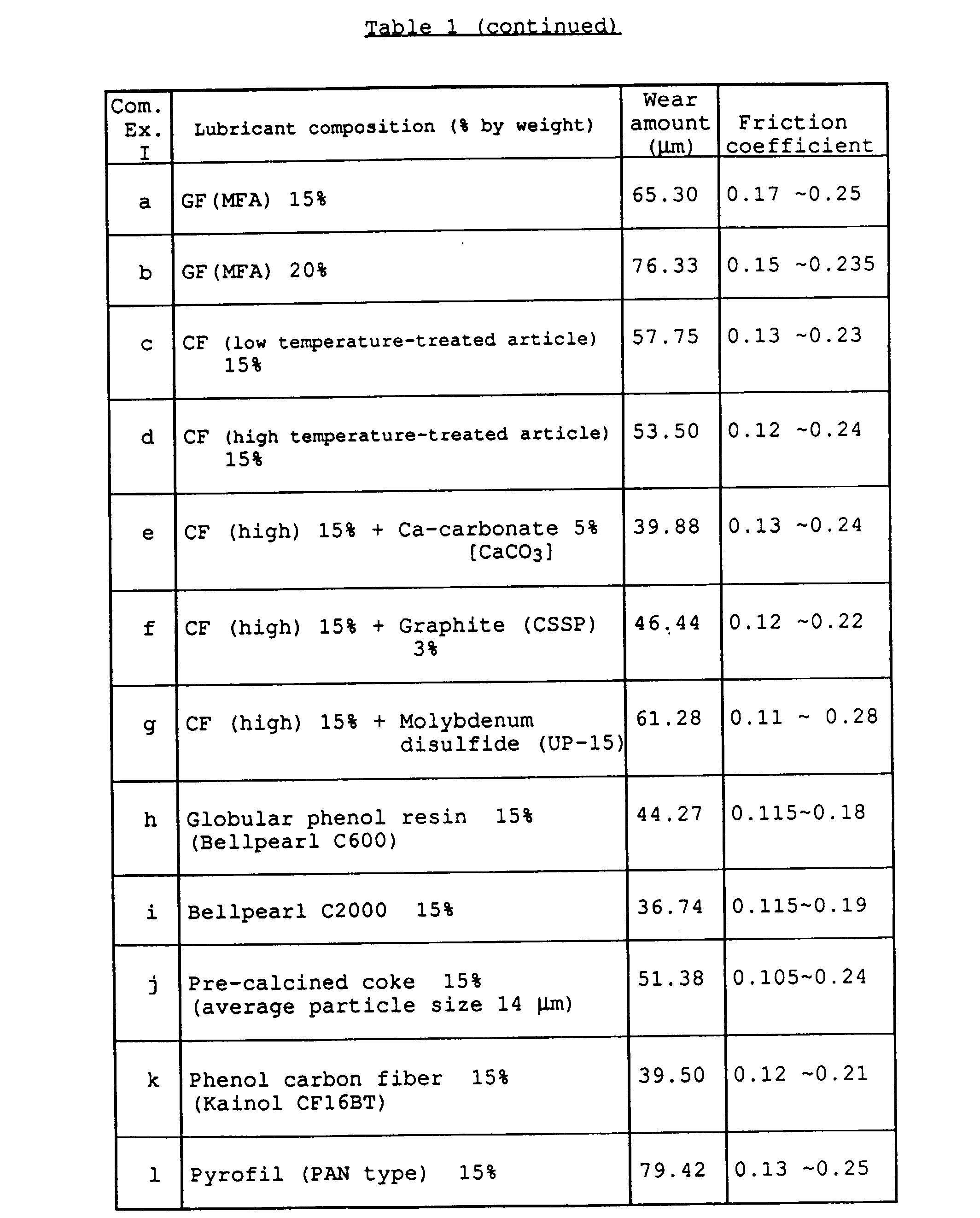

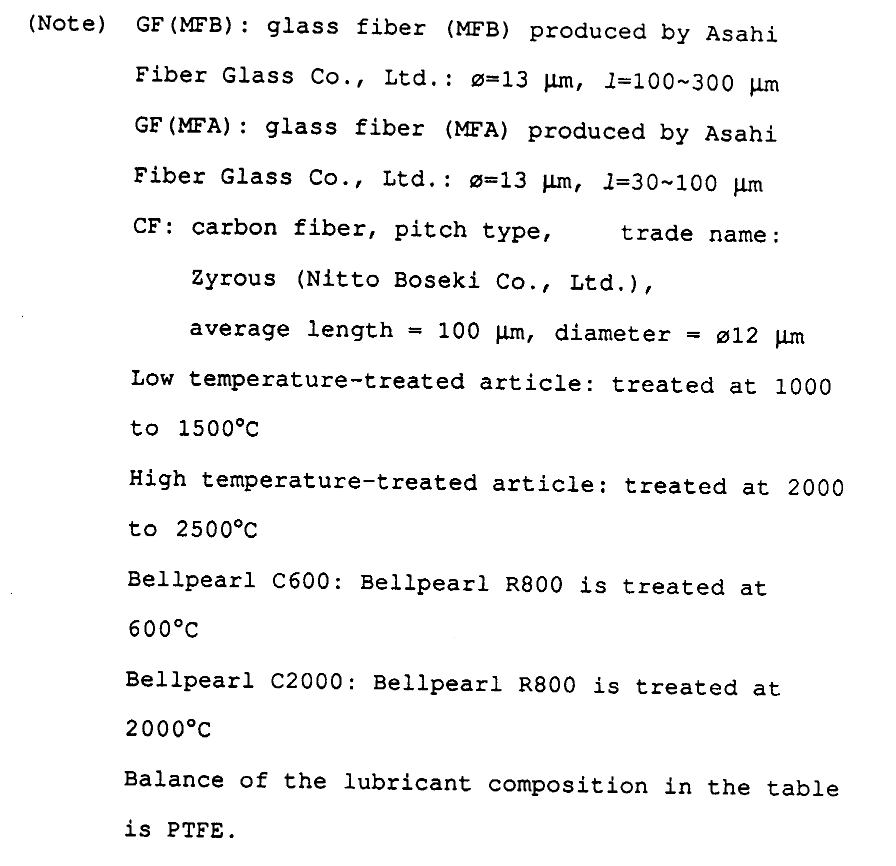

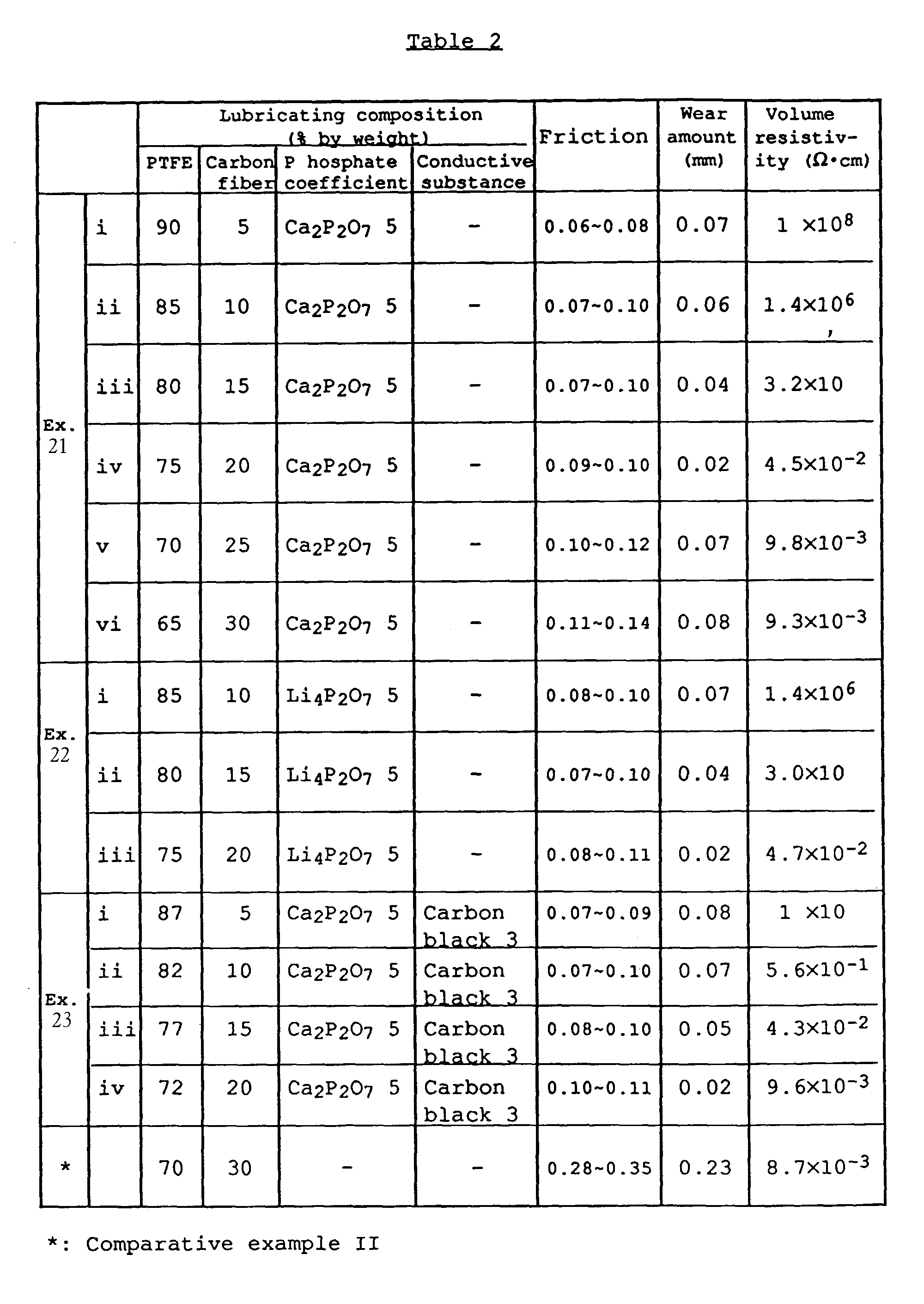

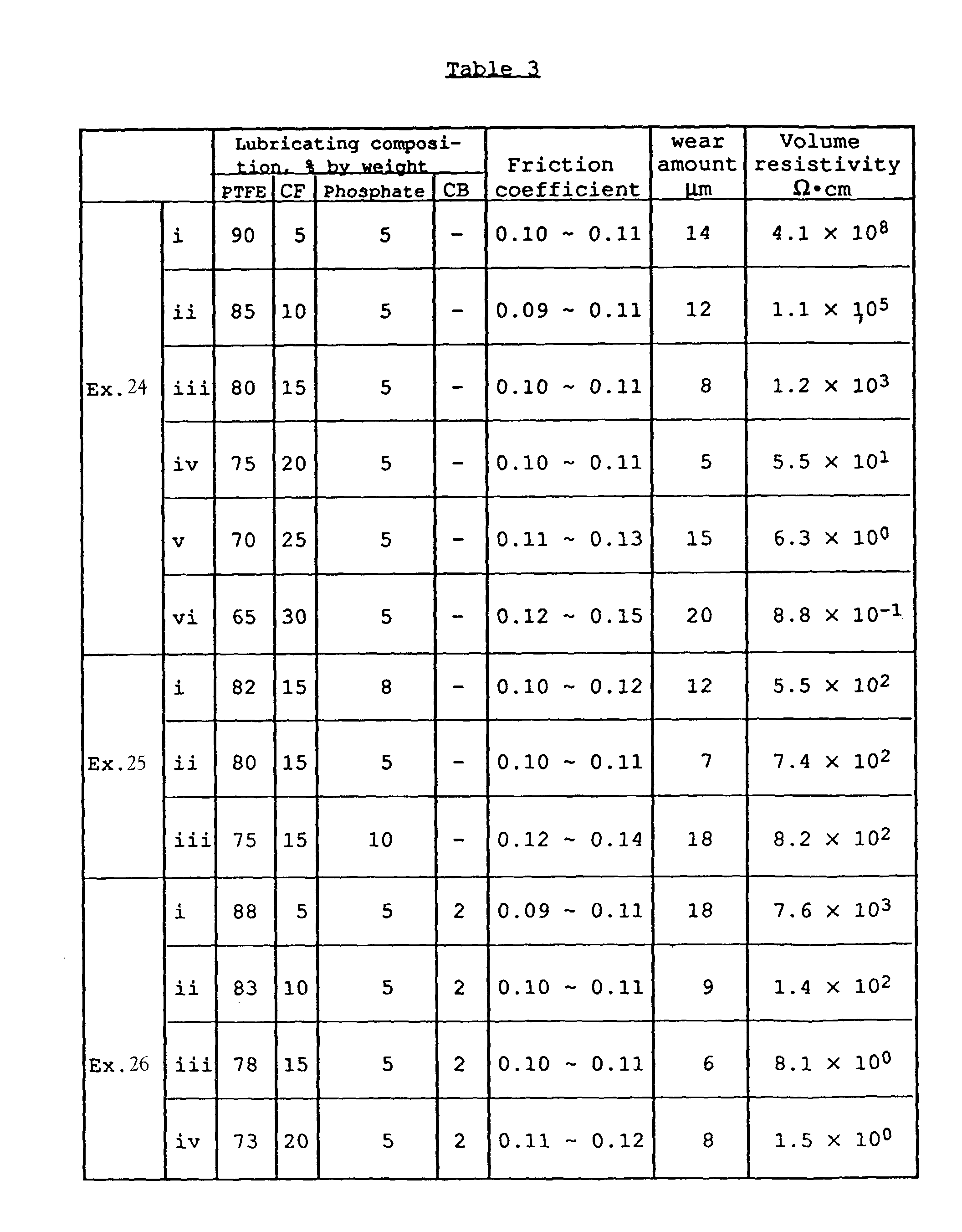

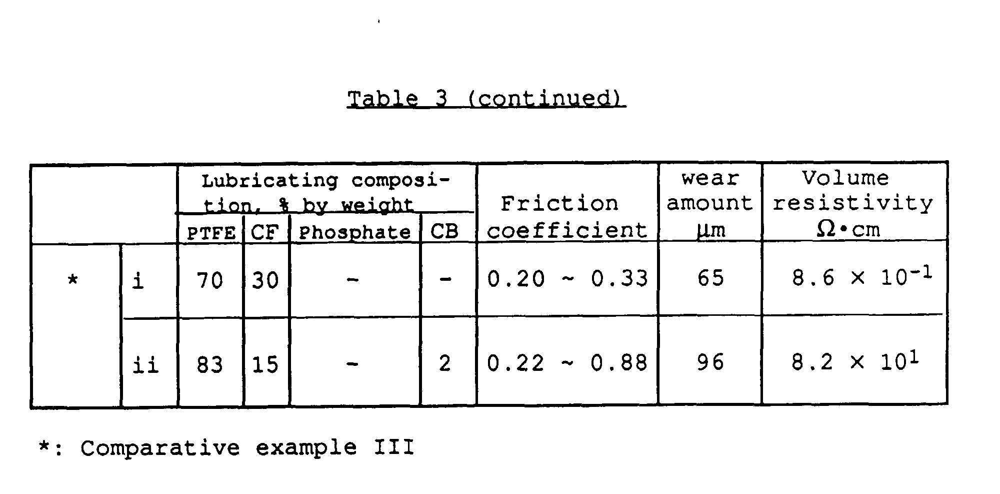

## Claims

1. A fluororesin composition which comprises:
(i) a fluororesin,
(ii) at least one filler selected from glass fibers, glass powder, carbon fibers and carbon powder, and
(iii) a phosphate selected from Li₃PO₄, Li₂HPO₄, Li₄P₂O₇, Ca₃(PO₄)₂, Ca₂P₂O₇, CaHPO₄(.2H₂O) and hydroxyapatite,
wherein if the filler is selected from glass fibres and glass powder it is present in an amount of from 1 to 40% by weight, if the filler is selected from carbon fibres and carbon powder it is present in an amount of from 1 to 30% by weight, and the phosphate is present in an amount of from 0.1 to 15% by weight, all the above weights being relative to the total weight of the composition.

2. A composition according to claim 1, wherein the total amount of the filler and phosphate is not more than 40.1% by weight relative to the total weight of the composition.

3. A composition according to claim 2, which comprises from 5 to 30% by weight of glass fibers or glass powder and from 3 to 10% by weight of the phosphate relative to the total weight of the composition.

4. A composition according to claim 2, which comprises from 2 to 20% by weight of carbon fibers or carbon powder and from 3 to 10% by weight of the phosphate relative to the total weight of the composition.

5. A composition according to any one of the preceding claims, wherein the fluororesin is a polytetrafluoroethylene.

6. A sliding member which is obtainable by pressing and molding a fluororesin composition as defined in any one of the preceding claims, and baking the thus obtained green compact.

7. A sliding member comprising a metal network structure, or a porous sintered metal layer formed on a steel back plate, as a base member and a fluororesin composition as defined in any one of claims 1 to 5 filled in the networks or impregnated in the porous sintered metal layer and coated on a surface of the base member.

8. A member according to claim 7, wherein the fluororesin composition comprises polytetrafluoroethylene, from 5 to 30% by weight of carbon fibers and from 0.1 to 15% by weight of the phosphate relative to the total weight of the composition.

9. A member according to claim 8, wherein the fluororesin composition further comprises from 0.1 to 10% by weight of a conductive substance relative to the total weight of the composition.

10. A member according to claim 9, wherein the conductive substance is at least one of amorphous carbon powder, graphite powder, copper powder, nickel powder and a soft metal powder.

11. A member according to any one of claims 7 to 10, wherein the metal network structure is an expanded metal or a metal mesh provided with regular networks.

## Patentansprüche

1. Fluorharzzusammensetzung, enthaltend
(i) ein Fluorharz,
(ii) mindestens einen unter Glasfasern, Glaspulver, Kohlenstoffasern und Kohlenstoffpulver ausgewählten Füllstoff und
(iii) ein unter Li₃PO₄, Li₂HPO₄, Li₄P₂O₇, Ca₃(PO₄)₂, Ca₂P₂O₇, CaHPO₄(.2H₂O) und Hydroxylapatit ausgewähltes Phosphat,
wobei der Füllstoff in einer Menge von 1 bis 40 Gew.-% vorliegt, wenn er unter Glasfasern und Glaspulver ausgewählt ist, und der Füllstoff in einer Menge von 1 bis 30 Gew.-% vorliegt, wenn er unter Kohlenstoffasern und Kohlenstoffpulver ausgewählt ist und das Phosphat in einer Menge von 0,1 bis 15 Gew.-% vorhanden ist, wobei sich die vorstehenden Gewichtsangaben auf das Gesamtgewicht der Zusammensetzung beziehen.

2. Zusammensetzung nach Anspruch 1, wobei die Gesamtmenge des Füllstoffes und Phosphats nicht mehr als 40,1 Gew.-%, bezogen auf das Gesamtgewicht der Zusammensetzung, beträgt.

3. Zusammensetzung nach Anspruch 2, die 5 bis 30 Gew.-% Glasfasern oder Glaspulver und 3 bis 10 Gew.-% des Phosphats, bezogen auf das Gesamtgewicht der Zusammensetzung, enthält.

4. Zusammensetzung nach Anspruch 2, die 2 bis 20 Gew.-% Kohlenstoffasern oder Kohlenstoffpulver und 3 bis 10 Gew.-% des Phosphats, bezogen auf das Gesamtgewicht der Zusammensetzung, enthält.

5. Zusammensetzung nach einem der vorhergehenden Patentansprüche, wobei das Fluorharz ein Polytetrafluorethylen ist.

6. Gleitteil, erhältlich durch Pressen und Formen einer Fluorharzzusammensetzung gemäß der Definition in einem der vorhergehenden Patentansprüche und Brennen des so erhaltenen grünen Preßlings.

7. Gleitteil, enthaltend eine Metallnetzstruktur oder eine poröse gesinterte Metallschicht, ausgebildet auf einer Stahl-Trägerplatte als Basisteil und eine Fluorharzzusammensetzung gemäß der Definition in einem der Ansprüche 1 bis 5, die in die Netzstruktur eingefüllt ist oder mit der die poröse gesinterte Metallschicht imprägniert ist und die auf eine Oberfläche des Basisteils aufgetragen ist.

8. Gleitteil nach Anspruch 7, wobei die Fluorharzzusammensetzung Polytetrafluorethylen, 5 bis 30 Gew.-% Kohlenstoffasern und 0,1 bis 15 Gew.-% des Phosphats, bezogen auf das Gesamtgewicht der Zusammensetzung, enthält.

9. Gleitteil nach Anspruch 8, wobei die Fluorharzzusammensetzung weiterhin 0,1 bis 10 Gew.-% einer leitfähigen Substanz, bezogen auf das Gesamtgewicht der Zusammensetzung, enthält.

10. Gleitteil nach Anspruch 9, wobei die leitfähige Substanz mindestens eines von amorphem Kohlenstoffpulver, Graphitpulver, Kupferpulver, Nickelpulver und einem Weichmetallpulver ist.

11. Gleitteil nach einem der Ansprüche 7 bis 10, wobei die Metallnetzstruktur ein Streckmetall oder ein mit regelmäßiger Netzstruktur ausgestattetes Metallgitter ist.

## Revendications

1. Composition à base de résine fluorée comprenant :
(i) une résine fluorée,
(ii) au moins une charge choisie parmi des fibres de verre, de la poudre de verre, des fibres de carbone et de la poudre de carbone, et
(iii) un phosphate choisi parmi Li₃PO₄, Li₂HPO₄, Li₄P₂O₇, Ca₃(PO₄)₂, Ca₂P₂O₇, CaHPO₄(.2H₂O) et l'hydroxyapatite,
dans laquelle si la charge est choisie parmi des fibres de verre et de la poudre de verre, elle est présente en une quantité allant de 1 à 40 % en masse, si la charge est choisie parmi des fibres de carbone et de la poudre de carbone, elle est présente en une quantité allant de 1 à 30 % en masse, et le phosphate est présent en une quantité allant de 0,1 à 15 % en masse, toutes les masses ci-dessus étant exprimées par rapport à la masse totale de la composition.

2. Composition selon la revendication 1, dans laquelle la quantité totale de la charge et du phosphate ne dépasse pas 40,1 % en masse par rapport à la masse totale de la composition.

3. Composition selon la revendication 2, qui comprend 5 à 30 % en masse de fibres de verre ou de poudre de verre et 3 à 10 % en masse de phosphate par rapport à la masse totale de la composition.

4. Composition selon la revendication 2, qui comprend 2 à 20 % en masse de fibres de carbone ou de poudre de carbone et 3 à 10 % en masse de phosphate par rapport à la masse totale de la composition.

5. Composition selon une quelconque des revendications qui précèdent dans laquelle la résine fluorée est le polytétrafluoroéthylène.

6. Elément de glissement que l'on peut obtenir en comprimant et en moulant une composition à base de résine fluorée telle que définie dans une quelconque des revendications qui précèdent, et en cuisant le comprimé vert ainsi obtenu.

7. Element de glissement comprenant, en tant qu'élément de base, une structure métallique en réseau ou une couche métallique frittée poreuse formée sur un socle en acier, et une composition à base de résine fluorée, telle que définie dans une quelconque des revendications 1 à 5, remplissant les réseaux ou imprégnant la couche métallique poreuse frittée et déposée sur une surface de l'élément de base.

8. Elément selon la revendication 7, dans lequel la composition à base de résine fluorée comprend du polytétrafluoroéthylène, 5 à 30 % en masse de fibres de carbone et 0,1 à 15 % en masse de phosphate par rapport à la masse totale de la composition.

9. Elément selon la revendication 8, dans lequel la composition à base de résine fluorée contient en outre 0,1 à 10 % en masse par rapport à la masse totale de la composition d'une substance conductrice.

10. Elément selon la revendication 9, dans lequel la substance conductrice est au moins une substance parmi de la poudre de carbone amorphe, de la poudre de graphite, de la poudre de cuivre, de la poudre de nickel et une poudre de métal doux.

11. Elément selon une quelconque des revendications 7 à 10, dans lequel la structure métallique en réseau est un métal expansé ou un tamis métallique avec des réseaux réguliers.
